**Europäisches Patentamt**

**European Patent Office**

**Office européen des brevets**

(11) Veröffentlichungsnummer: **0 198 952**
**A2**

(12) # EUROPÄISCHE PATENTANMELDUNG

(21) Anmeldenummer: **85113141.7**

(22) Anmeldetag: **31.01.83**

(51) Int. Cl.⁴: **A 01 B 15/14**
**A 01 B 73/00, A 01 B 3/36**

(30) Priorität: **24.04.82 DE 3215424**

(43) Veröffentlichungstag der Anmeldung:
**29.10.86 Patentblatt 86/44**

(84) Benannte Vertragsstaaten:
**AT FR GB IT**

(60) Veröffentlichungsnummer der früheren
Anmeldung nach Art. 76 EPÜ: **0 092 641**

(71) Anmelder: **Johann Gassner K.G.**
**Post Grosshelfendorf**
**D-8011 Göggenhofen(DE)**

(72) Erfinder: **Gassner, Benno**
**Haus Nr. 14c**
**D-8011 Göggenhofen(DE)**

(74) Vertreter: **Lamprecht, Helmut, Dipl.-Ing.**
**Corneliusstrasse 42**
**D-8000 München 5(DE)**

(54) **Mehrschariger Frontanbaupflug.**

(57) Ein mehrschariger Frontanbaupflug (14) ist mit einem über eine Anbauvorrichtung (12) mit einem Fahrzeug verbindbaren, Pflugrahmen (16) versehen, der aus mehreren Pflugrahmenabschnitten (16a, 16b, 16c, 16d) besteht, die aus einer Arbeitsstellung in Richtung auf die Anbauvorrichtung (12) teleskopartig ineinanderschiebbar sind.

FIG.1

Mehrschariger Frontanbaupflug.

Die Erfindung betrifft einen mehrscharigen Frontanbaupflug mit einem die Pflugkörper und gegebenenfalls ein Stützrad tragenden, über eine Anbauvorrichtung mit einem Fahrzeug verbindbaren Pflugrahmen, der aus relativ zueinander zwischen einer Arbeitsstellung und einer Transportstellung bewegbaren und in der Arbeits- und der Transportstellung festlegbaren Abschnitten besteht.

Frontanbaupflüge finden zunehmende Verbreitung, ihre mehrscharige Ausführung ist jedoch insofern problematisch, als die in Fahrtrichtung gelegene Vorderkante des Pfluges einen relativ großen Abstand vom Steuerrad des den Pflug tragenden Fahrzeugs einnimmt und dadurch Schwierigkeiten beim Straßentransport entstehen, zumal in der Bundesrepublik Deutschland die Vorschrift besteht, daß diese Vorderkante vom Steuerrad keinen größeren Abstand als etwa 3,50 m aufweisen darf. Wird dieser Abstand überschritten, so ist eine Sondergenehmigung erforderlich, doch auch mit einer solchen Sondergenehmigung darf der vorgeschriebene Abstand nicht wesentlich überschritten werden.

Es ist ein bekanntes Problem bei großen Anbaupflügen, daß der große Abstand des Pflugschwerpunktes zur Schlepperhinterachse beim Transport zu einer Entlastung der Schleppervoderachse führt, was die Lenkfähigkeit beeinträchtigt, weshalb man - wie aus der EP-A-19 275 hervorgeht - bereits vorgeschlagen hat, den Pflugrahmen in zwei Abschnitte zu unterteilen, die um eine in Arbeitsstellung des Pfluges etwa vertikale Achse derart verschwenkbar verbunden sind, daß für die Transportstellung der von der Anbauvorrichtung entfernt gelegene Abschnitt nach vorn umgeschwenkt und in eine zum vorderen Abschnitt etwa parallel verlaufende Lage überführt werden kann, wodurch der Schwerpunkt in der Transportstellung näher an die Schlepperhinterachse herangeführt werden kann. Da sich dabei auch die Gesamtlänge des Pfluges entsprechend verringert, kann eine solche Maßnahme auch dazu beitragen, die Vorderkante von Frontanbaupflügen näher an das den Pflug tragende Fahrzeug heranzurücken.

Wird der Pflugrahmen - wie bei der Konstruktion nach der EP-A 19 275 - nur mit einem Gelenk versehen, so können die zwei Pflugrahmenabschnitte derart gegeneinander gelegt werden, daß sich dabei die Pflugkörper nicht behindern; bei z.B. sechs Pflugkörpern bleibt aber - wie das dort gezeigte Ausführungsbeispiel zeigt - noch eine beachtliche Länge des Pflugrahmens auch in der Transportstellung erhalten.

Der Erfindung liegt die Aufgabe zugrunde, einen Pflug der eingangs beschriebenen Art so auszugestalten, daß auch eine grössere Anzahl von Pflugkörpern tragende Pflugrahmen in der Transportstellung nur eine relativ geringe Länge einnehmen, so daß also einerseits ein Pflug mit einer dem verwendeten Fahrzeug entsprechenden Zahl von Pflugkörpern ausgerüstet werden kann, um die Fahrzeugleistung voll auszunützen, während andererseits die Pfluglänge für den Transport so gering gehalten werden kann, daß die zulässigen Abmessungen nicht überschritten werden und die Verkehrssicherheit nicht beeinträchtigt wird.

Die Lösung dieser Aufgabe besteht darin, daß die Pflugrahmenabschnitte in Richtung auf die Anbauvorrichtung teleskopartig ineinanderschiebbar sind.

Durch diese Ausbildung kann der Pflugrahmen z.B. in so viel Abschnitte unterteilt werden, wie der Pflugrahmen hintereinander angeordnete Pflugkörper aufweist, ohne daß sich die Pflugkörper bei der Überführung der Pflugrahmenabschnitte in die Transportstellung gegenseitig behindern, weil sie parallel zu sich selbst in eine eng benachbarte Lage überführt werden, in der der Pflugrahmen mit den daran befindlichen Pflugkörpern einen extrem geringen Raumbedarf aufweist.

Anhand der nun folgenden Beschreibung eines in der Zeichnung dargestellten Ausführungsbeispiels der Erfindung wird diese näher erläutert.

Es zeigt:

Fig. 1    eine Seitenansicht eines Frontanbaudrehpfluges in Arbeitsstellung der Pflugrahmenabschnitte und

Fig. 2    eine Seitenansicht des Pfluges nach Überführung der Pflugrahmenabschnitte in die Transportstellung.

An einem nicht dargestellten Schlepper ist über eine nur schematisch gezeigte Anbauvorrichtung 12 ein Frontanbaudrehpflug 14 heb- und senkbar befestigt. Die Vorteile der Erfindung sind jedoch nicht auf Drehpflüge beschränkt.

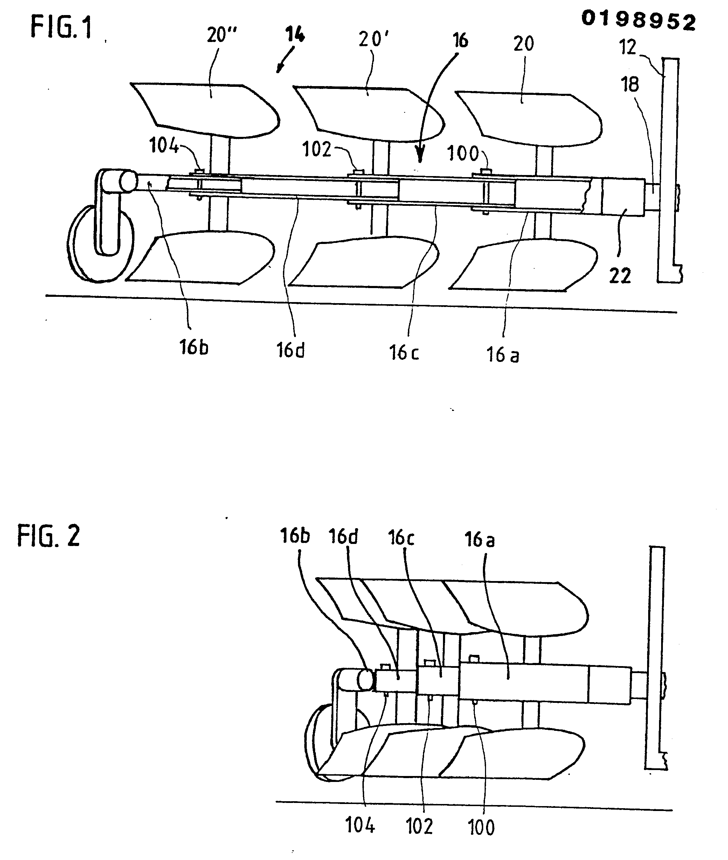

Der Pflug 14 besitzt einen Pflugrahmen 16, der über ein in der Anbauvorrichtung 12 angeordnetes Drehlager 18 mit horizontaler, etwa in Fahrtrichtung des Schleppers verlaufende Achse zwischen seinen beiden Arbeitsstellungen bewegbar ist, in denen bezogen auf Fig. 1  abwechselnd die untere oder die obere Gruppe von mit dem Rahmen 16 paarweise über Halter 28 verbundenen Pflugkörpern 20, 20' und 20"  zum Einsatz kommen.

Auf der vom Schlepper abgewandten Seite des Drehlagers 18 ist ein Schwenklager 22 angeordnet, dessen Achse in der in Fig. 1 gezeigten Arbeitsstellung des Pflugrahmens 16 etwa vertikal verläuft.

Am vorderen Pflugrahmenende ist ein Stützrad 24 um eine in der Arbeitsstellung des Pflugrahmens 16 horizontale und rechtwinklig zur Furchenrichtung der Pflugkörper 20, 20', 20" verlaufende Achse verschwenkbar mittels eines Stützradarms 26 gelagert.

Der Pflugrahmen 16 ist in vier teleskopartig gegeneinander bewegliche Abschnitte 16a, 16c, 16d und 16b unterteilt, von welchen sich der Abschnitt 16a an das Schwenklager 22 anschließt, während der Endabschnitt 16b das Lager für den Stützradarm 26 trägt. In der in Fig. 1 gezeigten Arbeitsstellung (Fig. 1) sind die Pflugrahmenabschnitte 16a - 16d durch in passende Bohrungen eingesteckte Sicherungsbolzen 100, 102 und 104 gesichert.

Nach dem Lösen dieser Sicherungsbolzen können die Pflugrahmenabschnitte 16a bis 16d in die in Fig. 2 gezeigte Transportstellung zusammengeschoben werden, in welcher die Sicherungsbolzen 100 - 104 wieder in passende Bohrungen eingesteckt werden können, um den Pflugrahmen 16 in dieser Anordnung festzulegen.

Anschließend kann der Pflugrahmen 16 ingesamt um das Schwenklager 22 zur Seite und anschließend durch eine Drehung des Pflugrahmens 16 um die Achse des Drehlagers 18 in eine nach oben verlaufende Position verschwenkt werden, wodurch die Vorderkante des Pflugrahmens 16 und der Pflugrahmenschwerpunkt noch weiter an die Anbauvorrichtung 12 angenähert werden.

**0198952**

Patentanspruch

Mehrschariger Frontanbaupflug (14) mit einem die Pflugkörper (20, 20', 20") und gegebenenfalls ein Stützrad (24)
tragenden, über eine Anbauvorrichtung (12) mit einem Fahrzeug
verbindbaren Pflugrahmen (16), der aus relativ zueinander
zwischen einer Arbeitsstellung und einer Transportstellung
bewegbaren und in der Arbeits- und der Transportstellung
festlegbaren Abschnitten (16a, 16b, 16c, 16d) besteht, dadurch gekennzeichnet, daß die Pflugrahmenabschnitte (16a,
16b, 16c, 16d) in Richtung auf die Anbauvorrichtung (12)
teleskopartig ineinanderschiebbar sind.

FIG.1

0198952

FIG. 2